# FASCICULE DE BREVET EUROPEEN

(11) **EP 1 001 340 B1**
(45) Date de publication et mention de la délivrance du brevet: **09.05.2007**
(21) Numéro de dépôt: 99402736.5
(22) Date de dépôt: 04.11.1999
(51) Int. Cl.: G06F 9/54, H04L 29/06, H04L 12/24

(54) **Procédé de construction d'une hiérarchie de canaux de communication asynchrones**
Verfahren zur Erbauung einer Hierarchie von Asynchronen Kommunikationskanälen
Process for building a hierarchy of asynchronous communication channels

(30) Priorité: 09.11.1998 FR 9814055
(43) Date de publication de la demande: 17.05.2000
(73) Titulaire: Alcatel Lucent, 75008 Paris (FR)
(72) Inventeur: Ruffin, Michel, 75003 Paris (FR)
(74) Mandataire: Lamoureux, Bernard

(56) Documents cités:
- WO-A-92/13309
- US-A- 4 914 583

## Description

La présente invention concerne un procédé pour construire une hiérarchie de canaux de communication asynchrones.

L'invention s'applique plus particulièrement à un service de notification d'évènements dans un système distribué d'objets, par exemple dans un système distribué d'objets basé sur le bus CORBA défini par l'OMG.

On rappelle que CORBA et OMG sont des acronymes anglo-saxons respectivement pour *Common Object Request Broker Architecture* et *Object Management Group.*

Dans un tel contexte, toutes les entités du système sont des objets, qui sont distribués dans le système.

On rappelle qu'un objet est défini par des données et une interface caractérisant un type et définissant un ensemble d'opérations que l'on peut invoquer sur cet objet.

Un service de notification d'évènements d'un tel système d'objets distribués permet à des objets d'émettre des informations de façon asynchrone, sans avoir à connaître ou à être averti d'éventuels objets consommateurs.

De même, un tel service de notification d'évènements permet à des objets de recevoir des notifications sans avoir à se préoccuper des objets émetteurs.

Le service agit donc comme un courtier entre des émetteurs et des consommateurs.

L'architecture générale d'un tel service de notification comprend deux parties : un gestionnaire de notifications et des canaux de transmission asynchrones.

Un canal est composé d'un ou plusieurs objets. Il comprend une interface d'invocation pour les objets émetteurs et une interface d'administration pour le gestionnaire de notification.

Le gestionnaire est en charge de l'administration générale du service. Il est ainsi chargé d'assurer l'instanciation et la suppression des canaux de communication asynchrone, l'enregistrement (*subscription* dans la littérature anglo-saxonne) de clients du service, émetteurs ou consommateurs de notifications, la mémorisation de la description des types de notification et des types de communication, et l'établissement de fédération de canaux, pour organiser le routage de notifications sur un autre canal, par exemple quand un canal est trop chargé.

On entend par type de notification, l'information qui indique la forme de l'invocation que l'on va trouver dans la notification.

En effet, on ne peut transmettre des notifications d'un type donné que par des objets acceptant le même type de notifications. Dans l'exemple d'un système basé sur le bus CORBA, on trouve essentiellement deux types de notifications, les notifications génériques, sous la forme pousse(donnée) (*push* dans la littérature anglo-saxonne) et qui s'appliquent à des objets avec une interface d'invocation prédéfinie avec cette seule opération "pousse" et les notifications typées, correspondant à un plus haut niveau d'abstraction, sous la forme opi(arg1,...argn) qui s'appliquent à des objets avec une interface d'invocation acceptant un grand nombre d'opérations op1 à opm, sur des arguments arg1 à argn en nombre variable d'une opération à une autre.

On entend par type de communication, le type selon lequel une communication est initiée. Une communication entre deux objets peut en effet être initiée à l'initiative de l'émetteur ou à l'initiative du récepteur.

Dans le premier cas, c'est une communication de type "pousser" (*push* dans la littérature anglo-saxonne) dans laquelle c'est l'objet émetteur qui invoque une opération. Dans le deuxième cas, c'est une communication de type "tirer" (*pull* dans la littérature anglo-saxonne) ou "essayer-tirer" (*try-pull* dans la littérature anglo-saxonne) dans lesquelles c'est l'objet de destination qui invoque un objet émetteur pour savoir si il a des notifications pour lui. Dans le modèle "tirer", l'objet de destination reste en attente de notifications. Dans le modèle "essayer-tirer", il n'attend pas. Ou bien les notifications, s'il y en a, lui sont envoyées en retour d'invocation, ou bien c'est l'objet émetteur qui fait ensuite une invocation.

Tous ses principes sont bien connus de l'homme du métier.

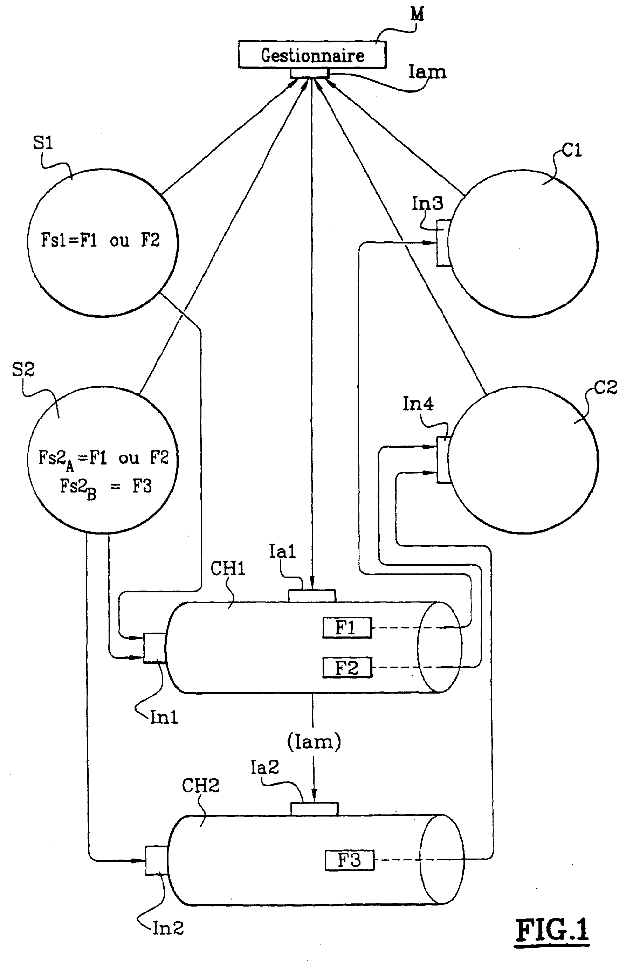

La figure 1 représente un schéma simplifié de l'architecture logique d'un tel service de notifications, dans le cas de communications de type "pousser".

Une notification est passée en invoquant une opération sur une interface d'invocation. Pour un client émetteur, il s'agit d'invoquer une opération sur l'interface d'invocation d'un canal pour lequel il s'est enregistré. Pour un canal, il s'agit d'invoquer une opération sur l'interface d'invocation d'un client consommateur, qui s'est enregistré pour ce canal.

Sur la figure 1 on a ainsi représenté deux clients émetteurs S1 et S2 et deux clients consommateurs C1, C2.

Le premier client émetteur S1 s'est enregistré pour un premier canal Ch1, ce qui lui permet de passer des notifications sur ce canal en invoquant des opérations sur une interface d'invocation In1 de ce canal.

Le deuxième client émetteur S2 s'est enregistré pour le premier canal Ch1 et pour un deuxième canal Ch2, ce qui lui permet de passer des notifications sur ces deux canaux, en invoquant des opérations sur l'interface d'invocation In1, In2 de chacun de ces canaux.

Le premier client consommateur C1 s'est enregistré pour recevoir des notifications du premier canal et le deuxième client consommateur C2 s'est enregistré pour recevoir des notifications du premier canal Ch1 et du deuxième canal Ch2. Les interfaces de notifications respectives de ces deux canaux sont notées In3 et In4 sur la figure 1.

La procédure d'enregistrement des clients et l'instanciation des canaux de communication asynchrone correspondants sont des fonctions qui sont gérées par un gestionnaire d'administration du service de notification, référencé M sur la figure 1.

Ce gestionnaire M du service dispose d'une interface d'administration Iam qui permet à des clients de s'enregistrer sur le service de notification d'évènement. Les canaux (leurs instances en fait) disposent chacun d'une interface d'administration pour permettre leur gestion par le gestionnaire M du service. Dans l'exemple, ces interfaces d'administration sont respectivement référencées Ia1 et Ia2 pour les canaux Ch1 et Ch2.

Pour limiter le trafic de notifications dans le système, en particulier sur le bus CORBA, il est prévu qu'un client consommateur peut s'enregistrer pour un canal auprès du gestionnaire M du service, en indiquant un filtrage particulier. Ceci lui permettra de ne recevoir que les notifications qu'il désire effectivement recevoir.

Ce filtrage est effectué par le canal, qui est instancié par le gestionnaire d'administration avec un filtre correspondant.

Dans l'exemple représenté sur la figure 1, le client consommateur C1 s'est enregistré avec un filtre F1 pour le canal Ch1 et le client consommateur C2 s'est enregistré avec un filtre F2 pour le canal Ch1 et avec un filtre F3 pour le canal Ch2.

Cependant, effectuer le filtrage de notifications dans le canal de communication asynchrone, prend du temps et n'évite pas un trafic de notifications inutile sur le bus CORBA (le réseau) entre l'émetteur de notifications et le canal, ce qui ralentit le trafic des notifications.

Une variante de ce procédé de filtrage de notifications consiste à propager les filtres en remontant aussi près que possible de la source des notifications, c'est à dire en les propageant aux clients émetteurs. C'est la méthode dite de "*quenching*" dans la littérature anglo-saxonne.

Pour un canal donné, on propage alors sur les clients émetteurs enregistrés, un filtrage qui est un OU de tous les filtres enregistrés pour ce canal. Dans l'exemple représenté sur la figure 1, on a ainsi un filtre Fs1 égal à F1 OU F2 pour l'émission par le client S1 de notifications sur le canal CH1 , un filtre Fs2_{A} égal à F1 ou F2 pour l'émission par le client S2 de notifications sur le canal CH1 et un filtre Fs2_{B} égal à F3 pour l'émission de notifications par le client S2 sur le canal CH2.

Avec le filtrage qui est fait au plus près de l'émission des notifications, c'est à dire sur les clients émetteurs, on ne transmet sur le canal que des notifications pour lesquelles il y a des clients consommateurs. Le trafic des notification par les dits canaux s'en trouve avantageusement réduit.

Il reste que cette variante ne résout en rien la nécessité d'effectuer du filtrage dans le canal lui même, puisqu'il faut, pour chaque client, appliquer le filtre correspondant sur les notifications qui sont reçues par le canal. Par exemple, le canal Ch1 de la figure 1 reçoit toutes les notifications correspondant aux filtres F1 et F2, et il doit faire passer toutes ces notifications dans le filtre F1 d'une part, pour transmettre les notifications filtrées résultantes au client consommateur C1 et dans le filtre F2 d'autre part, pour transmettre les notifications filtrées résultantes au client consommateur C2.

Des systèmes similaires sont connus dans l'état de l'art, par exemple US 4 914 583.

Un objet de l'invention est de réduire le nombre de filtres, voire de les supprimer dans certains cas favorables, pour ne pas ralentir le trafic.

Selon l'invention, on organise les notifications en sujets. Ces sujets correspondent à la nature des notifications. Par exemple, on peut avoir comme sujet, "faute", qui regroupe toutes les notifications d'évènements relatives à des fautes : matérielles, de réseau, de disque, logicielles ...

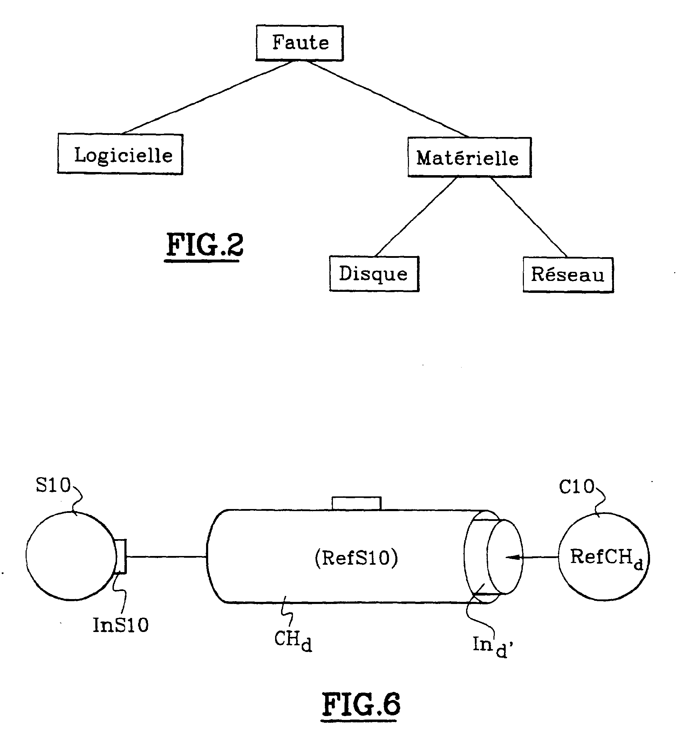

Pour chaque sujet, on peut avoir une arborescence de sous-sujets. Par exemple, pour le sujet "faute", on peut avoir l'arborescence représentée sur la figure 2, avec une première branche "logicielle" et une deuxième branche "matérielle". De cette deuxième branche "matérielle" partent deux autres branches, une branche "réseau" et une branche "disque".

Pour chaque sujet, un type est associé caractérisant une interface d'invocation. Un sous-sujet doit avoir le même type ou un sous-type du sujet auquel il est rattaché.

L'invention consiste alors à organiser les sujets selon une arborescence et à associer à chaque sujet un canal de communication asynchrone, en sorte que ces canaux se retrouvent hiérarchiquement organisés selon un schéma déterminé correspondant à l'arborescence des sujets, ce qui assure la transmission des notifications aux clients intéressés, sans avoir recours au filtrage.

Selon l'invention, un utilisateur du système peut donc enregistrer des sujets, auxquels sont associés des canaux de communication asynchrone. Des clients s'enregistrent pour recevoir des notifications d'un sujet donné. Si le canal correspondant n'est pas instancié, la hiérarchie des canaux est automatiquement réorganisée pour inclure ce canal. De même, si un client se désenregistre pour un sujet, la hiérarchie des canaux est automatiquement réorganisée pour supprimer le canal correspondant.

Telle que caractérisée, l'invention concerne donc un procédé d'organisation hiérarchique de canaux de communication asynchrone dans un service, un canal étant associé à un sujet. Selon l'invention, le procédé consiste, à chaque fois qu'un client émetteur ou récepteur dudit service s'enregistre pour un sujet pour lequel aucun canal n'est instancié,
- à instancier un canal pour ledit sujet;
- et à connecter ledit canal dans ladite hiérarchie selon un schéma déterminé.

Selon l'invention le schéma est déterminé par une arborescence des sujets.

D'autres caractéristiques et avantages de l'invention sont décrits dans la description suivante, faite à titre indicatif et nullement limitatif et en référence aux dessins annexés dans lesquels :
- la figure 1 déjà décrite représente un schéma d'une architecture de service de notification d'évènements;
- la figure 2 déjà décrite représente un exemple d'arborescence de sujets selon l'invention; et
- les figures 3 à 5 représentent chacune un exemple d'organisation hiérarchique des canaux de communication asynchrone selon l'invention, pour une communication de type "pousser"; et
- la figure 6 représente un exemple d'organisation hiérarchique des canaux de communication asynchrone selon l'invention, pour une communication de type "tirer".

Dans l'invention, on prévoit un procédé d'organisation hiérarchique des canaux de communication asynchrone du service, un canal étant associé à un sujet. Ce procédé consiste, à chaque fois qu'un client émetteur ou récepteur du service s'enregistre pour un sujet pour lequel aucun canal n'est instancié, à instancier un canal pour ce sujet et à connecter ce canal dans l'organisation hiérarchique selon un schéma déterminé.

Ce schéma est déterminé en pratique par l'arborescence des sujets.

Le canal associé à un sous-sujet d'un sujet donné sera connecté comme émetteur de notifications au canal du sujet et vice et versa.

Selon l'invention, on prévoit donc de déclarer des sujets dans le service de notification d'évènements, en sorte que l'on obtient une arborescence de ces sujets. Ces sujets sont déclarés par des utilisateurs, avec une description du type de notification associé.

Ces sujets sont alors disponibles pour les clients, consommateurs ou émetteurs qui peuvent s'enregistrer pour un ou plusieurs de ces sujets. Quand ils s'enregistrent, les clients doivent préciser le type de notification. Le gestionnaire du service vérifie qu'il y a compatibilité entre ce type et le type qui a été enregistré avec le sujet : le type demandé par le client doit être de même type que celui du sujet concerné.

Si il y a compatibilité et si un canal a déjà été instancié pour ce sujet, le client, consommateur ou émetteur, se voit attribuer ce canal par le gestionnaire. Si aucun canal n'a encore été instancié pour ce sujet, le gestionnaire de service crée un canal correspondant au sujet.

Lorsque le client est un consommateur, il doit donner sa référence (qui l'identifie dans le système), lors de l'enregistrement. Le gestionnaire de service fournit alors cette référence au canal qui est attribué à ce client. Si ce client est consommateur pour plusieurs sujets, sa référence est donnée à chacun des canaux qui lui sont attribués.

Lorsque le client est un émetteur, le gestionnaire du service lui transmet la référence de chacun des canaux qui lui sont attribués en tant qu'émetteur.

Ainsi, le client émetteur peut invoquer une opération sur chacun des canaux identifiés par leur référence. Chaque canal peut invoquer une opération sur chacun des clients consommateurs dont il détient la référence.

Pour un canal donné, lorsque tous les clients associés, émetteurs et consommateurs, se désenregistrent, le gestionnaire du service supprime le canal et réorganise la hiérarchie des canaux.

Ainsi, comparé à la méthode de filtrage, ou à la méthode dite de quenching, aucun traitement de filtrage n'a besoin d'être effectué ni par les clients émetteurs ni par les canaux, pour transmettre les notifications désirées à chacun des clients consommateurs enregistrés.

Le filtrage selon l'état de la technique, effectué pendant la transmission, est avantageusement remplacé dans l'invention par un traitement en amont, au moment des enregistrements et en aval, au moment des désenregistrements, ce traitement consistant en une organisation hiérarchique des canaux selon un schéma déterminé.

Du point de vue trafic de notifications, on obtient un résultat équivalent à la méthode dite de quenching, sans la perte de temps due au traitement du filtrage par les clients émetteurs et les canaux.

Le procédé d'organisation hiérarchique des canaux selon l'invention ne permet cependant pas de filtrer les notifications selon certaines contraintes. Par exemple, on ne peut pas filtrer les notifications selon la valeur prise par telle ou telle donnée. On peut alors prévoir de combiner le procédé d'organisation hiérarchique des canaux selon l'invention avec les méthodes de filtrage et de "quenching". Le traitement de filtrage par les clients émetteurs et les canaux est alors moins important que dans l'état de la technique, puisqu'il se limite à la vérification de contraintes.

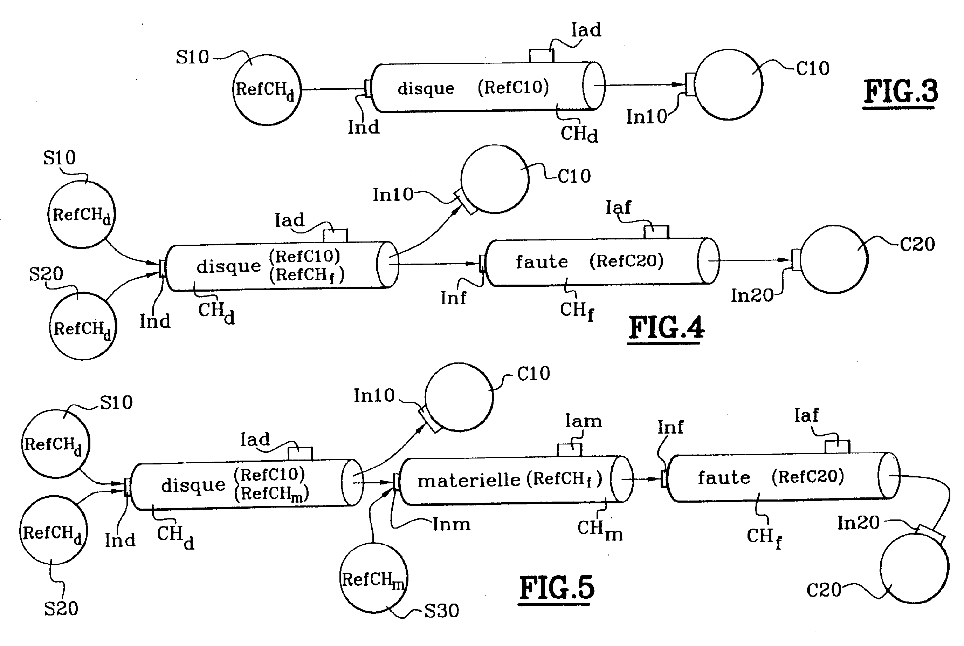

Les figures 3 à 5 représentent la connexion de canaux obtenue selon le procédé d'organisation hiérarchique selon l'invention et pour des communications de type "pousser".

Cette organisation hiérarchique se réfère à l'exemple d'arborescence de sujets représentée sur la figure 2. Il s'agit d'un exemple présenté à titre purement explicatif. Il n'est nullement exhaustif.

Dans la figure 3, un client émetteur S10 s'est enregistré pour le sujet "Disque". Un canal CH_{d} correspondant à ce sujet est instancié, avec une interface d'invocation Ind et une interface d'administration Iad. Sa référence RefCH_{d} est transmise au client S10.

Un client consommateur C10 avec une interface d'invocation In10, s'est enregistré pour ce même sujet. Il se voit attribué le même canal CH_{d} qui reçoit sa référence Refc10. Il recevra ainsi toutes les notifications correspondant à des fautes de disque de tous les émetteurs qui se sont enregistrés pour ce sujet, c'est à dire, dans l'exemple, par le client S10.

Dans la figure 3, un client émetteur S20 s'est aussi enregistré pour le sujet "disque" et s'est vu attribuer le canal CH_{d}. Par ailleurs un client consommateur C20 s'est enregistré pour le sujet "faute". Ce sujet est hiérarchiquement supérieur au sujet disque. En effet, selon l'arborescence représentée sur la figure 2, il peut il y avoir d'autres fautes que les fautes de disque. Aussi, le sujet "disque" est-il un sous-sujet du sujet "faute". Un canal CH_{f} correspondant au sujet "faute" est donc instancié, et connecté en sorte que le canal CH_{d} soit un émetteur pour lui. C'est ce qui est représenté sur la figure 4. Et le client C20 se voit attribuer le canal CH_{f}. Le canal CH_{d} devient émetteur pour le client C10 et pour le canal CH_{f}.

Sur la figure 5, un client émetteur S30 s'est enregistré pour le sujet "matériel". Ce sujet est un sous-sujet du sujet "faute" et le sujet "disque" est un sous-sujet du sujet "matériel" (arborescence représentée sur la figure 2). Aussi le procédé d'organisation hiérarchique selon l'invention appliquée à ce cas particulier consiste t-elle à instancier un canal correspondant CHₘ, et à le placer entre le canal CH_{d} et CH_{f}. Le canal CH_{d} est ainsi émetteur pour le canal CHₘ qui est lui même émetteur pour le canal CH_{f}. Et le client S20 se voit attribuer le canal CH_{f}.

D'une manière générale, lorsqu'un canal associé à un sujet déterminé a déjà été instancié et connecté dans la hiérarchie des canaux, un canal associé à un sous-sujet dudit sujet déterminé est connecté comme un émetteur vis à vis du canal du sujet déterminé.

Et lorsqu'un canal associé à un sujet déterminé a déjà été instancié et connecté dans la hiérarchie des canaux, un canal associé à un sujet, pour lequel le sujet déterminé est un sous-sujet, est connecté comme un récepteur vis à vis du canal du sujet déterminé.

Enfin, tant qu'il y a un client attribué à un canal, ce dernier est maintenu dans l'organisation. Si tous les clients qui lui étaient attribués se désenregistrent, ce canal peut être supprimé et l'organisation hiérarchique automatiquement revue par le gestionnaire du service. Par exemple, si le client S30 se désenregistre pour le sujet "matériel", le canal correspondant CHₘ pourra être supprimé et on reviendra alors à l'organisation représentée sur la figure 4.

La figure 6 représente un exemple de connexion de canaux selon l'invention, pour des communications de type "tirer" entre le client S10, le canal CH_{d} et le client C20 de la figure 3. On voit que la différence entre les deux figures tient au fait que ce sont les objets destinataires qui font les invocations. Ainsi, le client C10 contient la référence RefCH_{d} du canal CH_{d} pour faire des invocations sur une interface d'invocation correspondante Ind' sur ce canal. De même, le canal CH_{d} contient la référence Refs1 du client S10 pour faire des invocations sur une interface d'invocation correspondante Ins10.

Pour le reste, l'invention s'applique de la même manière que pour les communications de type "pousser". Tout ce qui a été décrit précédemment pour des communications de type "pousser" s'applique donc de la même manière aux communications de type "tirer".

D'une manière générale, l'invention s'applique aux deux types de communication qui peuvent être combinées.

L'invention a été décrite dans un exemple d'application à un service de notification d'évènements. Elle s'applique à tout service utilisant des canaux de communication asynchrone pour transmettre des informations quelconques.

Pour que le procédé s'applique correctement, les utilisateurs doivent vérifier que leur déclarations de sujets sont cohérentes. En effet pour qu'un sujet soit effectivement un sous-sujet d'un autre sujet, il faut que les opérations que le sous-sujet pourra invoquer sur ce sujet soient admissibles par ce dernier. Il s'agit d'un problème de compatibilité d'interfaces d'invocation, à vérifier par chaque utilisateur.

## Revendications

1. Procédé d'organisation hiérarchique de canaux de communication asynchrone dans un service, un canal étant associé à un sujet correspondant à une nature de notification d'événements transmis par ledit canal, **caractérisée en ce qu'**il consiste, à chaque fois qu'un client émetteur (S10) ou récepteur (C10) dudit service s'enregistre pour un sujet pour lequel aucun canal n'est instancié,
- à instancier un canal (CH_{d}) pour ledit sujet;
- et à connecter ledit canal dans ladite hiérarchie selon un schéma déterminé correspondant à une arborescence de sujets déclarés auprès du service.

2. Procédé selon la revendication 1, **caractérisé en ce que**, lorsqu'un canal (Ch_{f}) associé à un sujet déterminé a déjà été instancié et connecté dans ladite hiérarchie, un canal (CHₘ) associé à un sous-sujet dudit sujet déterminé est connecté comme un émetteur vis à vis du canal dudit sujet déterminé.

3. Procédé selon la revendication 1, **caractérisé en ce que**, lorsqu'un premier canal (CH_{d}) associé à un premier sujet a déjà été instancié et connecté dans ladite hiérarchie, un deuxième canal (CHₘ) associé à un deuxième sujet, dont le premier sujet est un sous-sujet, est connecté comme un récepteur vis à vis du premier canal.

4. Procédé selon l'une quelconque des revendications 1 à 3, **caractérisé en ce que** lorsque que tous les clients enregistrés pour un sujet déterminé se désenregistrent dudit sujet, le canal correspondant est supprimé et la hiérarchie des canaux automatiquement ré-organisée.

5. Procédé selon la revendication 1, **caractérisé en ce que** les canaux (CH_{d}, CH_{f}) peuvent en outre effectuer des traitements de filtrage.

6. Système comprenant des moyens de service permettant la communication asynchrone d'information sur des canaux, **caractérisé en ce qu'**elle utilise un procédé d'organisation hiérarchique desdits canaux selon l'une quelconque des revendications précédentes.

## Claims

1. A method of hierarchically organizing asynchronous communications channels in a service, a channel being associated with a subject corresponding to the nature of an event notification transmitted by said channel, **characterized in that**, each time that a sender client (S10) or a receiver client (C10) of said service subscribes to a subject for which no channel has been instantiated:
· a channel (CH_{d}) is instantiated for said subject, and
· said channel is connected in said hierarchy in accordance with a particular scheme corresponding to a tree of subjects declared to the service.

2. A method according to claim 1, **characterized in that**, when a channel (CH_{f}) associated with a particular subject has already been instantiated and connected in said hierarchy, a channel (CHₘ) associated with a sub-subject of said particular subject is connected as a sender vis-à-vis the channel of said particular subject.

3. A method according to claim 1, **characterized in that**, when a first channel (CH_{d}) associated with a first subject has already been instantiated and connected in said hierarchy, a second channel (CHₘ) associated with a second subject of which the first subject is a sub-subject is connected as a receiver vis-à-vis the first channel.

4. A method according to any of claims 1 to 3, **characterized in that** when all clients subscribing to a particular subject unsubscribe from said subject, the corresponding channel is eliminated and the hierarchy of channels is automatically reorganized.

5. A method according to claim 1, **characterized in that** the channels (CH_{d}, CH_{f}) can additionally effect filtering processes.

6. A system comprising service means providing asynchronous communication of information on channels, the system being **characterized in that** it uses a method of hierarchically organizing said channels according to any preceding claim.

## Patentansprüche

1. Verfahren zur hierarchischen Organisation von asynchronen Kommunikationskanälen in einem Dienst, wobei ein Kanal mit einem Thema verknüpft ist, das einer Art der Ereignismitteilung entspricht, die über den genannten Kanal übertragen wird, **dadurch gekennzeichnet, dass** es, immer wenn sich ein Sender-Client (S10) oder ein Empfänger-Client (C10) des genannten Dienstes für ein Thema registriert, für das kein Kanal instanziert ist, Folgendes umfasst:
- Instanzieren eines Kanals (CH_{d}) für das genannte Thema;
- und Verbinden des genannten Kanals in der genannten Hierarchie gemäß einem festgelegten Schema, das einer Baumstruktur mit Themen entspricht, die in diesem Dienst angemeldet sind.

2. Verfahren gemäß Anspruch 1, **dadurch gekennzeichnet, dass**, wenn ein Kanal (CH_{f}), der mit einem festgelegten Thema verknüpft ist, bereits instanziert und in der genannten Hierarchie verbunden ist, ein Kanal (CHₘ), der mit einem Teilthema des genannten festgelegten Themas verknüpft ist, als Sender in Bezug auf den Kanal für das genannte festgelegte Thema verbunden wird.

3. Verfahren gemäß Anspruch 1, **dadurch gekennzeichnet, dass**, wenn ein erster Kanal (CH_{d}), der mit einem ersten Thema verknüpft ist, bereits instanziert und in der genannten Hierarchie verbunden ist, ein zweiter Kanal (CHₘ), der mit einem zweiten Thema verknüpft ist, wovon das erste Thema ein Teilthema ist, als Empfänger in Bezug auf den ersten Kanal verbunden wird.

4. Verfahren gemäß einem der Ansprüche 1 bis 3, **dadurch gekennzeichnet, dass**, wenn sich alle für ein festgelegtes Thema registrierten Clients von dem genannten Thema abmelden, der entsprechende Kanal gelöscht und die Hierarchie der Kanäle automatisch neu organisiert wird.

5. Verfahren gemäß Anspruch 1, **dadurch gekennzeichnet, dass** die Kanäle (CH_{d}, CH_{f}) außerdem Filterverarbeitungen ausführen können.

6. System, das Dienste-Vorrichtungen umfasst, die eine asynchrone Übertragung von Informationen auf Kanälen ermöglichen, **dadurch gekennzeichnet, dass** sie ein Verfahren zur hierarchischen Organisation der genannten Kanäle gemäß einem der vorhergehenden Ansprüche nutzen.
